# EUROPEAN PATENT SPECIFICATION

(11) **EP 2 744 595 B1**
(45) Date of publication and mention of the grant of the patent: **04.03.2020**
(21) Application number: 12808901.8
(22) Date of filing: 04.10.2012
(51) Int. Cl.: B01L 3/02

(54) **SAMPLE LIQUID INJECTION JIG SET**
INJEKTIONSVORRICHTUNGSSET FÜR PROBENFLÜSSIGKEIT
ENSEMBLE GABARIT D'INJECTION D'ÉCHANTILLON LIQUIDE

(30) Priority: 07.10.2011 JP 2011222906
(43) Date of publication of application: 25.06.2014
(73) Proprietor: Sony Corporation, Tokyo 108-0075 (JP)
(72) Inventor: WATANABE, Toshio, Tokyo 108-0075 (JP); KOJIMA, Kensuke, Tokyo 108-0075 (JP); SEGAWA, Yuji, Tokyo 108-0075 (JP); WATANABE, Hidetoshi, Tokyo 108-0075 (JP); KATO, Yoshiaki, Tokyo 108-0075 (JP)
(74) Representative: D Young & Co LLP
(86) International application number: PCT/JP2012/006392
(87) International publication number: WO 2013/051274

(56) References cited:
- US-A- 3 754 434
- US-A- 5 098 402
- US-A- 5 638 828
- US-A1- 2010 323 433

## Description

### Technical Field

The present technique relates to a sample liquid injection jig. More specifically, the present technique relates to a sample liquid injection jig set which is composed by including a microchip case and a liquid injection jig, and which is used for injection of a sample liquid into the microchip.

### Background Art

In recent years, a microchip in which regions such as wells and flow paths for carrying out a chemical analysis or a biological analysis are provided in a substrate such as a substrate made of silicon or a substrate made of a glass by applying a fine processing technology in a semiconductor industry has been developed (for example, refer to a patent literary document 1). An analysis system using such a microchip is referred to as a micro-TAS(micro-Total-Analysis System), a lab-on-a-chip, a bio chip or the like, and is attracting attention as a technology for enabling speeding-up, high efficiency promotion or high integration promotion of the analysis, miniaturization of an analyzer, and the like.

Since in the micro-TAS, the analysis is possible with a small amount of sample, and disposable use of the microchip is possible, in particular, there is expected an application of the micro-TAS to the biological analysis which deals with a small amount of precious sample, and a large number of samples.

As an example of the application of the micro-TAS, there is an optical detector which introduces a material to plural regions disposed in a microchip, and optically detects the material concerned. With regard to such an optical detector, there are an electrophoresis apparatus which separates plural materials from one another within flow paths of a microchip based on electrophoresis, and optically detects the materials thus separated, a reaction apparatus (for example, a real-time nucleic acid amplification reaction apparatus) which causes a reaction among plural materials within wells of a microchip to progress, and optically detects a material(s) generated, and the like.

Since in the micro-TAS, an amount of sample was small, and each of the regions such as the well and the flow path was minute, it was difficult to precisely introduce the sample to the region(s). Thus, the introduction of the sample was impeded by air existing within the region(s), and it took time to introduce the sample in some cases. In addition, during the introduction of the sample, bubbles were generated in the region(s) in some cases. As a result, there was caused a problem that a dispersion was generated in amounts of samples introduced into the flow paths, the wells and the like, and thus an analysis precision was reduced, and an analysis efficiency was reduced. In addition, when the heating of the sample was carried out as with the nucleic acid amplification reaction, there was caused a problem that the bubbles remaining in the region(s) expanded, thereby impeding the reaction, and reducing the analysis precision.

For causing the introduction of the sample in the micro-TAS to be easy, for example, Patent Document 2 discloses "a substrate including at least a sample introducing portion for introducing a sample, plural accommodating portions for accommodating therein the sample, and plural exhausting portions connected to the plural accommodating portions, respectively, in which at least two or more exhausting portions are communicated with one open path whose one end is opened." In this substrate, since the exhausting portions are connected to the accommodating portions, respectively, whereby the air existing in the accommodating portions is exhausted from the exhausting portions when the sample is introduced from the sample introducing portion to the accommodating portions, the sample can be smoothly filled in the accommodating portions.

### [Citation List]

### [Patent Literature]

[PTL 1] Japanese Patent Laid-Open No. 2004-219199
[PTL 2] Japanese Patent Laid-Open No. 2009-284769

US 5,098, 402 describes a retractable hypodermic syringe having a syringe body forming a barrel at one end and a tubular needle connector at the opposite end which surround a needle support passage and forms cam surfaces and locking recesses at the end portion of the needle connector. A needle support element is positionable within the needle support passage and has cam projections which are extendible through grooves defined along the plunger which is receivable within the syringe barrel is provided with an elongated projection that serves both as a piston support for a resilient piston carried thereby and as a needle support actuator which is movable into releasably interlocked relation with the needle support element thus enabling the plunger to impart both rotational and linear movement to the needle support element for its locking, unlocking, and retracted positions relative to the syringe body. The plunger is movable to a position locking the forward portion of the plunger, the piston and the needle support element with a syringe needle affixed thereto at an enclosed and protected position within the syringe barrel. The plunger includes a frangible section enabling the rear portion of the plunger to be broken away after locking of the forward portion of the piston has been accomplished.

### [Summary of Invention]

### [Technical Problem]

As described above, since in the micro-TAS, an amount of sample was small, and each of the regions such as the well and the flow path was minute, it was difficult to precisely introduce the sample to the region(s) in some cases. Then, it is a principal object of the present technique to provide a sample liquid injection jig set which is capable of simply and precisely introducing a sample to a region of a microchip.

### [Solution to Problem]

In order to solve the problems described above, the present invention provides a liquid injecting jig set as described in claim 1. The liquid injecting jig includes a jig configuration including a plurality of parts adapted to be in cooperative engagement so as to position a channel within the jig configuration, wherein the jig configuration is adapted to fit an opening through which the channel is adapted to be received so as to expose the channel from the jig configuration. The jig set is used for injection of a liquid to a microchip, the jig set including a microchip case for accommodating therein a microchip in which a region to which a liquid is introduced from an outside is formed, and a liquid injection jig which includes a channel through which the liquid is introduced to the region and in which a position of the channel is adapted to be changed between a position of accommodation in an inside of the jig, and a position of exposure to the outside of the jig. In the jig set, the microchip case is provided with an opening portion into which a liquid injection jig is fitted. In addition, the microchip case and the liquid injection jig are provided with a braking mechanism for moving the channel from the accommodation position to the exposure position only in a phase of fitting of the liquid injection jig into the opening portion to allow the channel to be positioned in a predetermined portion of a substrate layer forming the region.
In the jig set, the liquid injection jig includes a main body in which the channel and a guide pin are disposed, and a member in which a guide groove for guiding the guide pin to control a movement of the channel is formed, and only in the phase of the fitting of the liquid injection jig into the opening portion, the braking mechanism causes a direction of guide for the guide pin by the guide groove to agree with the direction of the movement of the channel from the accommodation position to the exposure position, thereby allowing the channel to be moved from the accommodation position to the exposure position.
In the jig set, the channel of the liquid injection jig is positioned in the predetermined portion of the microchip, whereby the liquid sample can be simply and precisely introduced to the region(s) of the microchip. In addition, in the jig set, since the channel of the liquid injection jig is exposed to the outside of the jig only in a state in which the liquid injection jig is fitted into the microchip case, during an injection operation, an operator is prevented from touching the channel by mistake, and thus can safely carry out the operation.

In the jig set, the member of the liquid injection jig can be composed of a first member having a first guide groove which is linearly formed in a direction along the direction of the movement of the channel from the accommodation position to the exposure position, and a second member having a second guide groove which is formed in a hook-like shape in a direction along the movement direction and in a direction orthogonal to the movement direction. In this case, the guide pin undergoes a bearing operation by the first guide groove and the second guide groove to be guided. Also, in a state in which the guide pin undergoes the bearing operation by the first guide groove and a portion of the second guide groove orthogonal to the movement direction, the movement of the channel from the accommodation position to the exposure position is blocked, and the channel is held in the accommodation position. Also, in a state in which the guide pin undergoes the bearing operation by the first guide groove and a portion of the second guide groove along the movement direction, the channel can be moved from the accommodation position to the exposure position. Specifically, engaging portions which are engaged with each other in a phase of fitting of the liquid injection jig into the opening portion is formed in the opening portion of the microchip case, and one of the first member or the second member of the liquid injection jig, respectively. Also, in a state in which the liquid injection jig is fitted into the opening portion, a position of the other member is changed for one member whose position is fixed by the engaging portions of the first member or the second member, whereby a portion of the second member along the movement direction of the second groove, and the first guide groove of the first member are superposed on each other, and the guide pin is changed from the state in which the guide pin undergoes the bearing operation by the first guide groove and a portion of the second guide groove orthogonal to the movement direction over to the state in which the guide pin undergoes the bearing operation by the first groove and the portion of the second groove along the movement direction.
The position change of the other member for one member whose position is fixed by the engaging portions of the first member or the second member can be carried out by rotating or sliding the liquid injection jig in the state in which the liquid injection jig is fitted into the opening portion.

In addition, in the jig set, the member of the liquid injection jig may be a disc member in which a guide groove is linearly formed in a radial direction from a center of a circle, and which can be rotated with the guide pin inserted into the center as an axis. In this case, in a state in which the disc member is located in a rotation position where a direction of the guide groove of the disc member, and the direction of the movement of the channel from the accommodation position to the exposure position do not agree with each other, the movement of the channel from the accommodation position to the exposure position is blocked and the channel is held in the accommodation position. Also, in a state in which the disc member is located in a rotation position where the direction of the guide groove, and the movement direction agree with each other, the channel can be moved from the accommodation position to the exposure position.

Specifically, plural teeth which are engaged with each other in the phase of the fitting of the liquid injection jig into the opening portion are formed in the opening portion of the microchip case, and a side peripheral surface of the disc member. Also, in the state in which the liquid injection jig is fitted into the opening portion, the liquid injection jig is rotated, and the disc member is rotated with the guide pin as an axis by engagement of the teeth, whereby the disc member is changed from the rotation position where the direction of the guide groove and the movement direction do not agree with each other over to the rotation position where the direction of the guide groove and the movement direction agree with each other.

In addition, the present technique provides a liquid injection jig including a main body in which a channel through which a liquid is introduced to a region formed in a microchip, and a guide pin are disposed, and a member in which a guide groove for guiding the guide pin to control a movement of the channel. In the liquid injection jig, a position of the channel can be changed between a position of accommodation in an inside of the jig, and a position of exposure to an outside of the jig, and a guide direction for the guide pin by the guide groove can be changed. Also, the guide direction is made to agree with a direction of a movement from the accommodation position to the exposure position to move the channel from the accommodation position to the exposure position, thereby positioning the channel in a predetermined portion of a substrate layer forming the region.

The liquid injection jig has a braking mechanism for moving the channel from the accommodation position to the exposure position only in a phase of fitting of the liquid injection jig into the opening portion provided in the microchip case for accommodating therein the microchip to position the channel in a predetermined portion of a substrate layer forming the region.

Specifically, the braking mechanism described above causes the guide direction of the guide pin by the guide groove to agree with the direction of the movement of the channel from the accommodation position to the exposure position only in the phase of the fitting of the liquid injection jig into the opening portion, thereby making it possible to move the channel from the accommodation position to the exposure position.

In addition thereto, the present technique provides a microchip case as well for accommodating therein a microchip in which a region to which a liquid is introduced from an outside, in which an opening portion into which a liquid injection jig including a channel through which the liquid is introduced to the region is fitted is provided in such a way that the channel is positioned for a predetermined portion of a substrate layer forming the region in a phase of fitting of the liquid injection jig into the opening portion.

The microchip case is constructed so as to include a case upper portion having the opening portion formed therein, a case lower portion coupled to the case upper portion through a hinge, and an opening portion cover whose position can be changed between a position where the opening portion is covered and a position where the opening is exposed. Also, in the microchip case, the microchip is accommodated between the case upper portion and the case lower portion in a state in which the hinge is closed.

In the microchip case, the opening portion cover has a claw which is engaged with an engaging portion provided in the case lower portion to hold the hinge in a closed state in a position where the opening portion is exposed. In this case, preferably, the opening portion cover is slid between the position where the opening portion is covered and the position where the opening portion is exposed, the engaging portion is formed along a slide direction of the opening portion cover, and a portion corresponding to the claw of the opening portion cover located in the position where the opening portion is covered is cut out.

In the microchip case, preferably, the opening portion into which the liquid injection jig described above is fitted is provided in such a way that in the phase of the fitting of the liquid injection jig into the opening portion, the channel is positioned for the predetermined portion of the substrate layer forming the region, and the microchip case has a braking mechanism for moving the channel from the accommodation position to the exposure position only in the phase of the fitting of the liquid injection jig into the opening portion, thereby positioning the channel in the predetermined portion.

### Advantageous Effects of Invention

The present technique provides the microchip in which the sample can be simply and precisely introduced to the region, and thus the high analysis precision is obtained.

### Brief Description of Drawings

[fig.1]FIG. 1 is a view explaining a construction of a microchip case 1 included in a jig set according to a first embodiment of the present technique.
[fig.2]FIG. 2 is a view explaining a construction of the microchip case 1 included in the jig set according to the first embodiment of the present technique.
[fig.3]FIG. 3 is a view explaining a construction of the microchip case included in the jig set according to the first embodiment of the present technique.
[fig.4]FIG. 4 is a view explaining a construction of a microchip 3.
[fig.5]FIG. 5 is a view explaining a method of introducing a sample liquid to a microchip 3.
[fig.6]FIG. 6 is a view showing a construction of a liquid injection jig 2 included in the jig set according to the first embodiment of the present technique.
[fig.7]FIG. 7 is a view showing a construction of the liquid injection jig 2 included in the jig set according to the first embodiment of the present technique.
[fig.8]FIG. 8 is a view explaining a method of injecting a liquid into the microchip 3 using the microchip case 1 and the liquid injection jig 2.
[fig.9]FIG. 9 is a view explaining the method of injecting the liquid into the microchip 3 using the microchip case 1 and the liquid injection jig 2.
[fig. 10] FIG. 10 is a view explaining a construction of an opening portion 15 of a microchip case 1b included in a jig set according to a second embodiment of the present technique.
[fig. 11]FIG. 11 is a view explaining a construction of a liquid injection jig 2b included in the jig set according to the second embodiment of the present technique.
[fig.12]FIG. 12 is a view explaining a method of injecting a liquid into a microchip using the microchip case 1b and the liquid injection jig 2b.
[fig.13]FIG. 13 is a view explaining a construction of a microchip case 1c and a liquid injection jig 2c included in a jig set according to a third embodiment of the present technique.
[fig.14]FIG. 14 is a view explaining a construction of the liquid injection jig 2c included in the jig set according to the third embodiment of the present technique.

### Description of Embodiments

Hereinafter, suitable modes for carrying out the present technique will be described with reference to the drawings. It is noted that embodiments which will be described below show an example of typical embodiments of the present technique, and thus the scope of the present technique is not narrowly construed by the embodiments. The description will be given in accordance with the following order.
1. Jig Set According to First Embodiment
   (1) Microchip Case
   (2) Microchip
      (2-1) Construction of Microchip
      (2-2) Introduction of Sample Liquid to Microchip
   (3) Liquid Injection Jig
   (4) Injection of Sample Liquid using Jig Set
2. Jig Set According to Second Embodiment
   (1) Microchip Case
   (2) Liquid Injection Jig
   (3) Injection of Sample Liquid using Jig Set
3. Jig Set According to Third Embodiment
   (1) Microchip Case and Liquid Injection Jig
   (2) Injection of Sample Liquid using Jig Set

### 1. Jig Set According to First Embodiment

### (1) Microchip Case

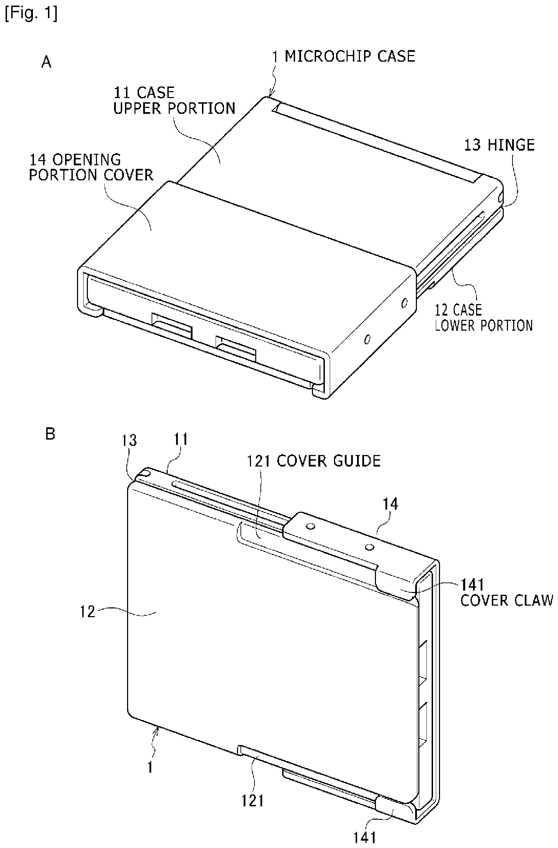

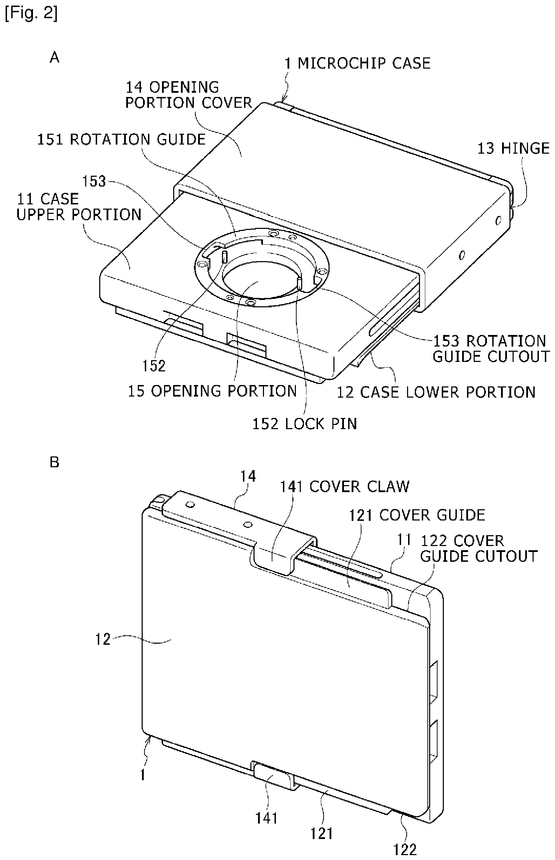

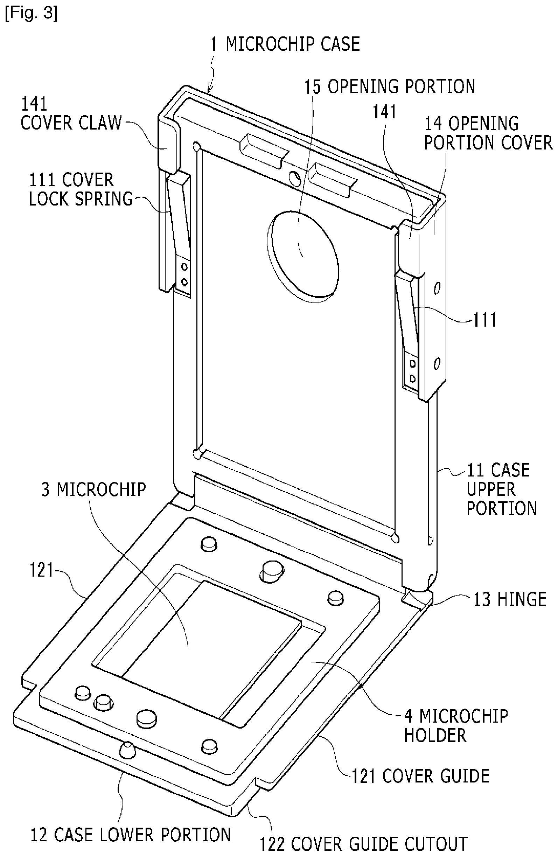

FIGS. 1 to 3 are respectively schematic views each showing a construction of a microchip case included in a jig set according to a first embodiment of the present technique. FIG. 1 shows a state in which the microchip case is closed, FIG. 2 shows a state in which an opening portion cover of the microchip case is opened, and FIG. 3 shows a state in which the microchip case is opened.

The microchip case 1 is composed of a case upper portion 11, a case lower portion 12, and an opening portion cover 14. The case upper portion 11 and the case lower portion 12 are coupled to each other by a hinge 13. In the microchip case 1, a microchip 3 is accommodated between the case upper portion 11 and the case lower portion 12 (refer to FIG. 3). In FIG. 3, reference numeral 4 designates a microchip holder for mounting the microchip 3 to the case lower portion 12. The case lower portion 12 and the microchip holder 4 are provided with a positioning pin and a positioning hole for positioning a position where the microchip 3 is to be mounted, respectively (reference numerals thereof are omitted).

An opening portion 15 into which a liquid injection jig 2 which will be described later is to be fitted is formed in the case upper portion 11, and a position of an opening portion cover 14 can be changed between a position where the opening portion 15 is covered (refer to FIG. 1), and a position where the opening portion 15 is exposed (refer to FIG. 2). The opening portion cover 14 can be slid between the covered position and the exposure position.

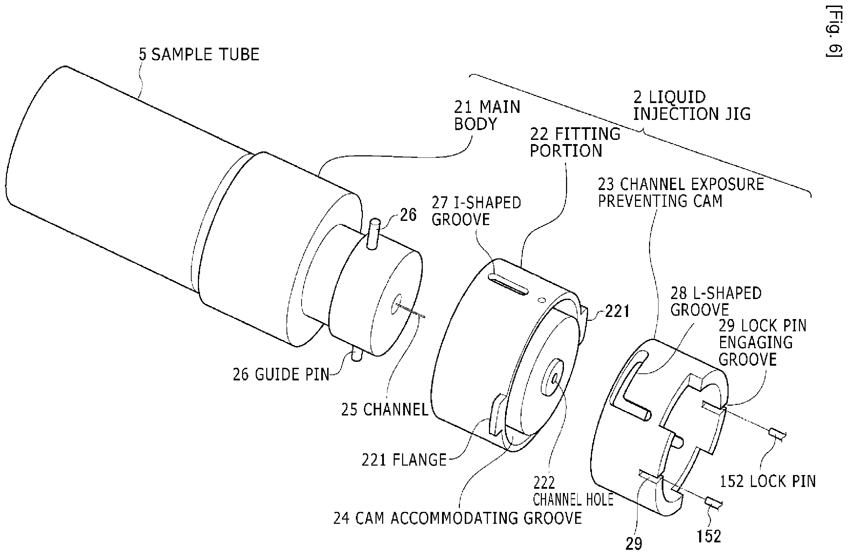

The opening portion 15 functions in order to position a channel 25 (refer to FIG. 6 which will be described later) disposed in the liquid injection jig 2 for a predetermined portion of the microchip 3 accommodated in the case. In addition, a rotation guide 151 which is engaged with flanges 221 (refer to the same figure) of the liquid injection jig 2, and lock pins 152 which are engaged with one of members composing the liquid injection jig 2 are disposed in the opening portion 15. In FIG. 2, reference 153 designates a rotation guide cutout through which the flanges 221 of the liquid injection jig 2 are inserted when the flanges 221 are engaged with the rotation guide 151. The positioning function of the opening portion 15, and the functions of the rotation guide 151 and the lock pins 152 will be described in detail later.

The opening portion cover 14 has cover claws 141 which are respectively engaged with cover guides 121 provided in the case lower portion 12. The cover guides 121 are formed along a slide direction of the opening portion cover 14. When the opening portion cover 14 is located in the exposure position of the opening portion 15, the cover claw 141 is engaged with the cover guide 121 to hold the hinge 13 in the closed state (refer to FIG. 2). For this reason, while the opening portion cover 14 is located in the exposure position of the opening portion 15, the microchip case 1 cannot be opened.

Portions corresponding to the respective cover claws 141 of the opening portion cover 14 located in the covered position of the opening portion 15 are partially cut out, thereby composing cover guide cutouts 122 in the cover guides 121, respectively. For this reason, while the opening portion cover 14 is located in the covered position of the opening portion 15, the cover claws 141 are prevented from being engaged with the cover guides 121, respectively, and thus the hinge 13 can be opened to open the microchip case 1 (refer to FIG. 1 and FIG. 3).

When the microchip 3 is desired to be accommodated in the microchip case 1, the hinge 13 is opened in a state in which the opening portion cover 14 is located in the covered position of the opening portion 15, and the microchip case 1 is then opened (refer to FIG. 3). At this time, for the purpose of fixing a position of the opening portion cover 14, the case upper portion 11 is provided with cover lock springs 111. In a state in which the microchip case 1 is opened, the cover lock springs 111 protrude so as to be engaged with the cover claws 141 of the opening portion cover 14, respectively, thereby fixing the position of the opening portion cover 14. On the other hand, in a state in which the microchip case 1 is closed, the cover lock springs 111 are depressed by the case lower portion 12 with which the cover lock springs 111 come in contact, thereby releasing the position fixing for the opening portion cover 14.

The microchip case 1 can be made of plastic. For the purpose of allowing the microchip 3 accommodated in the microchip case 1 to be visually recognized, preferably, a window is provided, or a part of or all of the microchip case 1 is made of a transparent material. As a result, in a phase of injection of a sample liquid into the microchip 3, the sample liquid which is being introduced to flow paths and wells can be confirmed by visual contact. In addition, for the purpose of magnifying the flow paths and the wells to enhance the visibility, a lens may be disposed in a window of the microchip case 1.

### (2) Microchip

### (2-1) Construction of Microchip

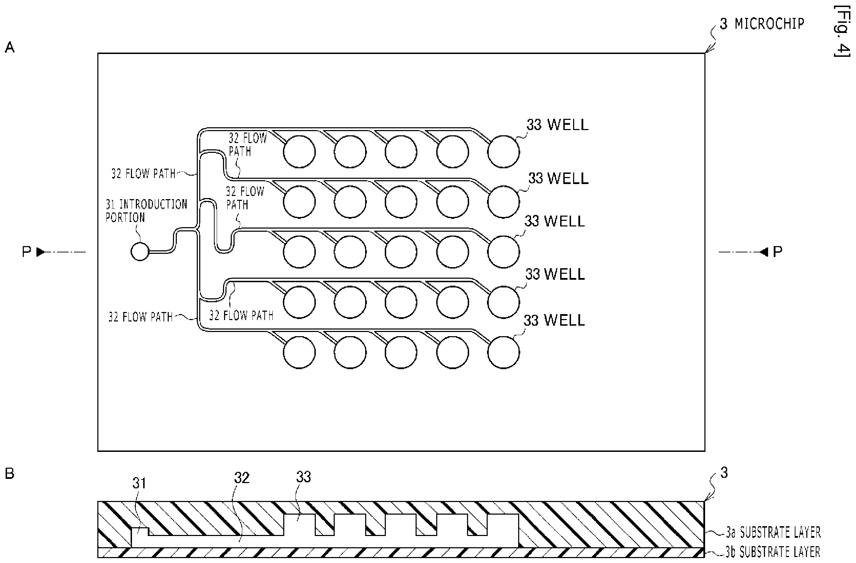

FIG. 4 is a schematic view showing an example of a construction of the microchip 3 accommodated in the microchip case 1. FIG. 4A shows a top plan view, and FIG. 4B shows a cross sectional view corresponding to a P-P cross section in FIG. 4A. It is noted that the microchip 3 does not become a constituent element essential to the jig set according to the present technique.

An introduction portion 31, flow paths 32, and wells 33 are disposed as regions to which a liquid (sample liquid) containing therein a material as an object of a chemical analysis or a biological analysis is introduced in the microchip 3.

The introduction portion 31 is a region into which the sample liquid is injected from the outside through puncture. The well 33 is a region which becomes an analytical field for a material contained in the sample liquid or a reaction product of the material concerned. The flow path 32 is a region through which the sample liquid injected into the introduction portion 31 is fed to the wells 33. The sample liquid which has been injected to the introduction portion 31 to be fed through the flow paths 32 is introduced to the wells 33 in order.

The microchip 3 is constructed by sticking a substrate layer 3b to a substrate layer 3a in which the introduction portion 31, the flow paths 32, and the wells 33 are formed. In the microchip 3, the substrate layer 3b is stuck to the substrate layer 3a under a negative pressure with respect to the atmospheric pressure, whereby the insides of the regions of the introduction portion 31, the flow paths 32, and the wells 33 are hermetically sealed so as to become a negative pressure (for example, 1/100 atmospheres) with respect to the atmospheric pressure. In addition thereto, preferably, the sticking between the substrate layer 3a and the substrate layer 3b is carried out under vacuum, and the insides of the regions are hermetically sealed so as to become the vacuum.

A glass or various kinds of plastic (polypropylene, polycarbonate, cycloolefin polymer, polydimethylsiloxane) can be used as materials of the substrate layers 3a and 3b. At least one of the substrate layers 3a and 3b is preferably made of a material having elasticity. In addition to silicon system elastomer such as polydimethylsiloxane (PDMS), acrylic system elastomer, urethane system elastomer, fluorinated elastomer, styrene system elastomer, epoxy system elastomer, a natural rubber, and the like are given as the material having the elasticity. At least one of the substrate layers 3a and 3b is made of any of such materials each having the elasticity, whereby an auto-sealing property which will be next described can be given to the microchip 3.

When the analysis of the material introduced to the wells 33 is optically carried out, a material which has light permeability, which is less in autogenic fluorescence, and which has a small optical error because of a small wavelength dispersion is preferably selected as the materials of the substrate layers 3a and 3b.

The forming of the introduction portion 31, the flow paths 32, and the wells 33 for the substrate layer 3a can be carried out by, for example, wet etching or dry etching for a substrate layer made of a glass, or nanoimprint, injection molding, or cutting work for a substrate layer made plastic. The regions may be formed in the substrate layer 3b, or a part thereof may be formed in the substrate layer 3a and a remaining part thereof may be formed in the substrate layer 3b. The sticking between the substrate layer 3a and the substrate layer 3b can be carried out by, for example, utilizing a known technique such as thermal fusion bonding, an adhesive agent, anodic bonding, joining using an adhesive sheet, plasma activation coupling, or ultrasonic joining.

A substrate layer having gas impermeability may be further laminated on the substrate layers 3a and 3b. As a result, the sample liquid which vaporizes when the sample liquid introduced to the wells 33 is heated can be prevented from being permeated through the substrate layer(s) to disappear (liquid-exit).

A glass, a plastic class, a metal class, a ceramics class, or the like can be adopted as the material of the substrate layer having the gas impermeability. PMMA (polymethylmethacrylate: acrylic resin), PC (polycarbonate), PS (polystyrene), PP (polypropylene), PE (polyethylene), PET (polyethyleneterephthalate), diethylene glycolbisallyl carbonate, a SAN resin (styrene-acylonitrile copolymer), an MS resin (MMA-styrene copolymer), TPX (poly(4-methylpentene-1)), polyolefin, SiMA (siloxanilmethacrylate monomer)-MMA copolymer, SiMA-fluorine-containing monomer copolymer, silicon macromer-(A)-HFBuMA(heptafluorobutylmethacrylate)-MMA terpolymer, disubstituted polyacetylene system polymer, and the like are given as the plastic class. Aluminum, copper, stainless (SUS), silicon, titanium, tungsten, and the like are given as the material class. Alumina (Al₂O₃), an aluminum nitride (AlN), a silicon carbide (SiC), a titanium oxide (TiO₂), a zirconia oxide (ZrO₂), a quartz, and the like are given as the ceramics class.

### (2-2) Introduction of Sample Liquid to Microchip

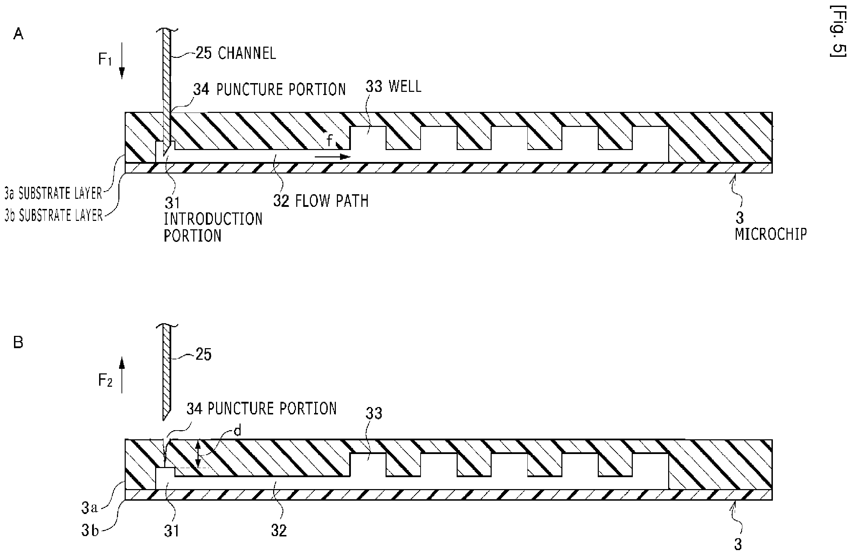

Next, a method of introducing a sample liquid to the microchip 3 will be described with reference to FIG. 5. FIG. 5 is a cross sectional schematic view of the microchip 3, and corresponds to a P-P cross section in FIG. 4

A channel 25 disposed in a liquid injection jig 2 which will be described later is punctured into the substrate layer 3a, and the sample liquid is then injected into the introduction portion 31, thereby introducing the sample liquid to the microchip 3 (refer to FIG. 5 A). In the figure, an arrow F₁ indicates a direction of puncture of the channel 25. The channel 25 is punctured from the surface of the substrate layer 3a in such a way that a tip portion of the channel 25 extends perfectly through the substrate layer 3a to reach an inner space of the introduction portion 31. A puncture portion of the channel 25 in the substrate layer 3a is designated by reference numeral 34. It is noted that when the gas impermeable substrate layer is laminated on the substrate layer 3a, the lamination is carried out on regions other than the puncture portion 34 and the periphery thereof.

The sample liquid which has been injected from the outside to the introduction portion 31 is fed through the flow path 32 (refer to an arrow f in the figure) to be introduced to the well 33. In the microchip 3, the inside of each of the regions of the introduction portion 31, the flow path 32, and the well 33 is set at the negative pressure with respect to the atmospheric pressure. For this reason, when the tip portion of the channel 25 has reached the inner space of the introduction portion 31, the sample liquid is sucked by the negative pressure to be smoothly introduced to each of the regions for a short time. In addition, when the inside of each of the regions is set at the vacuum, since air does not exist in the inside of each of the regions, it is prevented that the introduction of the sample liquid is impeded by the air, and bubbles are generated.

After introduction of the sample liquid, as shown in FIG. 5B, the channel 25 is drawn out, and the puncture portion 34 of the substrate layer 3a is sealed. In the figure, an arrow F₂ indicates a direction of drawing-out of the channel 25. At this time, the substrate layer 3a is made of the material, such as PDMS, having the elasticity, whereby after the channel 25 has been drawn out, the puncture portion 34 can be naturally sealed by a restoring force caused by elastic deformation of the substrate layer 3a. In the present technique, we shall define the natural sealing of the puncture portion by the elastic deformation of the substrate layer as "an auto-sealing property" of the substrate layer.

For ensuring the auto-sealing property 3a, a thickness (in the figure, refer to reference symbol d) of the substrate layer from the substrate layer surface in the puncture portion 34 up to the inner space of the introduction portion 31 needs to be set to a suitable range in correspondence to the material of the substrate layer 3a and a diameter of the channel 25. In addition, when the microchip 3 is heated in the phase of the analysis, the thickness d is set in such a way that the auto-sealing property is prevented from being lost due to a rise in an inner pressure following the heating.

For the purpose of ensuring the auto-sealing by the elastic deformation of the substrate layer 3a, a member which is fine in diameter as much as possible is desirably used in the channel 25. Specifically, a pain-free needle which has a tip outer diameter of about 0.2 mm, and which is used as an injection needle for insulin is suitably used.

When the pain-free needle having the tip outer diameter of about 0.2 mm is used as the channel 25, the thickness d of the substrate layer 3a made of PDMS is suitably equal to or larger than 0.5 mm, and when the heating is carried out, the thickness d of the substrate layer 3a made of PDMS is suitably equal to or larger than 0.7 mm.

In this case, the microchip 3 has been described on the assumption that five sets of five wells which are communicated with one another through one flow path (25 wells in total) are disposed. However, in the microchip 3, the number and positions of the wells disposed can be arbitrarily set, and the shape of each of the wells is by no means limited to a columnar shape shown in the figure. In addition, the construction of each of the flow paths for feeding the sample liquid to the wells shall be by no means limited to the form shown in the figure. In addition thereto, in this case, the case where the substrate layer 3a is made of the elastic material, and the channel 25 is punctured from the surface of the substrate layer 3a has been described. However, the channel 25 may also be punctured from the surface of the substrate layer 3b, and in this case, it is only necessary that the substrate layer 3b is made of the elastic material and is given the auto-sealing property.

### (3) Liquid Injection Jig

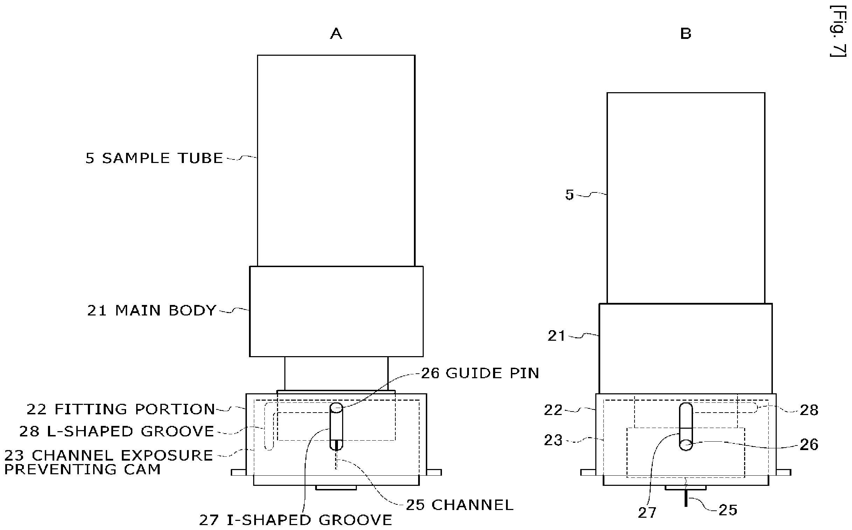

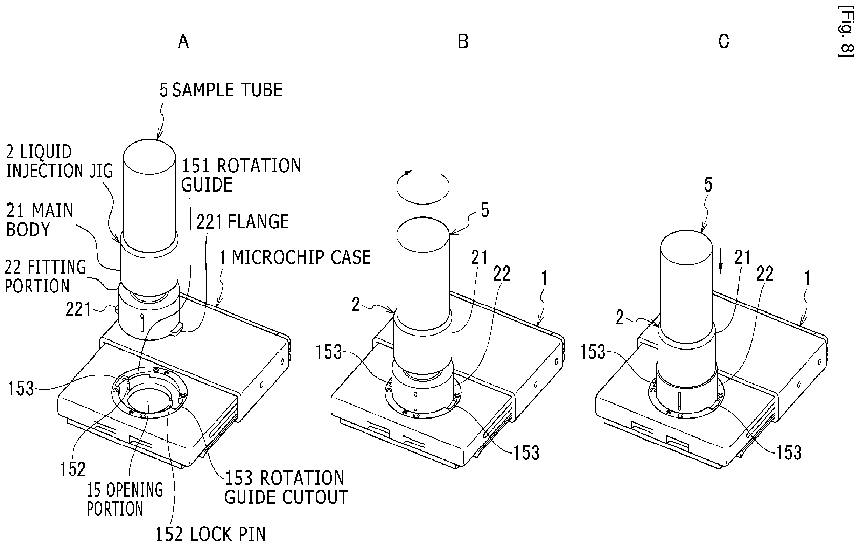

FIGS. 6 and 7 are schematic views showing a construction of the liquid injection jig included in the jig set according to the first embodiment of the present technique. FIG. 6 shows parts composing the liquid injection jig. FIG. 7 shows the liquid injection jig in a state FIG. 7A in which the channel is located in the accommodation position, and the liquid injection jig in a state FIG. 7B in which the channel is located in the exposure position. In addition, FIG. 8 is schematic views showing a method of mounting the liquid injection jig to the microchip case, and a method of injecting the liquid into the microchip.

The liquid injection jig 2 is composed of a main body 21, a fitting portion 22, and a channel exposure preventing cam 23 (refer to FIG. 6). The channel exposure preventing cam 23 is accommodated in a cam accommodating groove 24 formed in the fitting portion 22. Both of the fitting portion 22 and the channel exposure preventing cam 23 can be slid in a state in which the channel exposure preventing cam 23 is accommodated in the cam accommodating groove 24.

The sample tube 5 filled with the sample liquid can be squeezed to be mounted to the main body 21. In addition, the channel 25 for injecting the sample liquid in the sample tube 5 into the microchip 3 through the puncture is disposed in the main body 21. In the liquid injection jig 2, the channel 25 can be changed in position between a position of accommodation in the inside of the jig (refer to FIG. 7 A), and a position of exposure to the outside of the jig (refer to FIG. 7 B). In FIG. 6, reference numeral 222 designates a channel hole through which the channel 25 located in the exposure position is inserted.

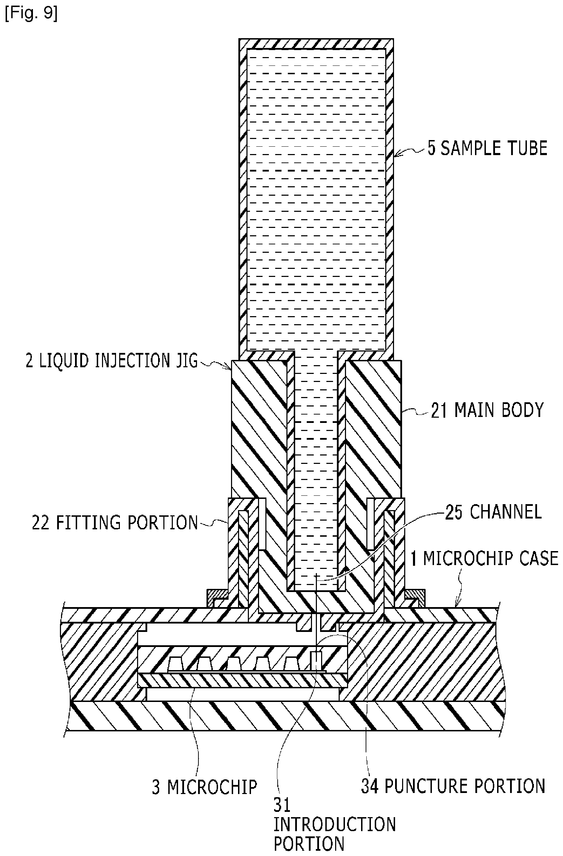

The liquid injection jig 2 can be mounted to the microchip case 1 by fitting the fitting portion 22 into the opening portion 15 of the microchip case 1 described above. Specifically, flanges 221 provided in the fitting portion 22 are inserted through rotation guide cutouts 153 (refer to FIG. 8 A), and the flanges 221 are engaged with a rotation guide 151 by rotating the liquid injection jig 2, thereby making it possible to mount the liquid injection jig 2 to the microchip case 1 (refer to FIG. 8 B). In this case, the opening portion 15 functions in order to position the channel 25 disposed in the liquid injection jig 2 for the puncture portion 34 of the microchip 3 (refer to FIG 9 as well which will be described later).

A guide pin 26 is disposed in the main body 21, and guide grooves for guiding the guide pin 26 are formed in the fitting portion 22 and the channel exposure preventing cam 23, respectively. A guide groove 27 (hereinafter referred to as "an I-shaped groove 27" as well) is formed linearly in the fitting portion 22 in a direction (hereinafter referred to as "a channel protrusion direction" as well) along a direction of a movement of the channel 25 from the accommodation position (refer to FIG. 7 A) to the exposure position (refer to FIG. 7 B). On the other hand, a guide groove 28 (hereinafter referred to as "an L-shaped groove 28") is formed in a folding-like shape in the channel exposure preventing cam 23 in a direction along the channel protrusion direction and in a direction orthogonal thereto. The I-shaped groove 27 and the L-shaped groove 28 are formed so as to be partially superposed on each other in a state in which the channel exposure preventing cam 23 is accommodated in the cam accommodating groove 24 of the fitting portion 22. Also, the guide pin 26 is inserted through a superposing portion between the I-shaped groove 27 and the L-shaped groove 28 to undergo the bearing operation by both of the guide grooves to be guided.

The guide pin 26, the I-shaped groove 27, and the L-shaped groove 28 all function as a braking mechanism for controlling the movement from the accommodation position of the channel 25 to the exposure position (or the movement from the exposure position to the accommodation position). Lock pins 152 provided in the opening portion 15 of the microchip case 1, and lock pin engaging grooves (refer to reference numeral 29 in FIG. 6) provided in the channel exposure preventing cam 23 also become constituent elements composing the braking mechanism. The braking mechanism will now be described with reference to FIG. 7.

Firstly, in a state shown in FIG. 7A, the guide pin 26 undergoes the bearing operation by the I-shaped groove 27 of the fitting portion 22, and the portion of the L-shaped groove 28 of the channel exposure preventing cam 23 orthogonal to the channel protrusion direction. In this state (hereinafter referred to as "a lock state" as well), since both of the main body 21 and the channel 25 cannot be moved in the channel protrusion direction, the channel 25 is held in the accommodation position.

On the other hand, in a state shown in FIG. 7B, the guide pin 26 undergoes the bearing operation by the I-shaped groove 27 of the fitting portion 22, and the portion of the L-shaped groove 28 of the channel exposure preventing cam 23 along the channel protrusion direction. In this state (referred to as "a release state" as well), both of the main body 21 and the channel 25 can be moved in the channel protrusion direction. Therefore, as shown in the figure, the channel 25 can be moved from the accommodation position to the exposure position by pushing the main body 21 into the fitting portion 22.

In the lock state, the guide direction for the guide pins 26 by the I-shaped groove 27 and the L-shaped groove 28 is a direction orthogonal to the channel protrusion direction and becomes a rotation direction (refer to an arrow in FIG. 8 B) of the liquid injection jig 2. On the other hand, the guide direction for the guide pins 26 by the I-shaped groove 27 and the L-shaped groove 28 in the release state is changed to a direction agreeing with the channel protrusion direction.

### (4) Sample Liquid Injection Using Jig Set

The switching between the lock state and the release state can be carried out by mounting the liquid injection jig 2 to the opening portion 15 of the microchip case 1 to rotate the liquid injection jig 2. That is to say, firstly, the flanges 221 provided in the fitting portion 22 of the liquid injection jig 2 held in the lock state are inserted through the rotation guide cutouts 153 (refer to FIG. 8 A). At this time, lock pin engaging grooves 29 provided in the channel exposure preventing cam 23, and the lock pins 152 provided in the opening portion 15 are engaged with each other (refer to FIG. 6 as well).

After completion of this operation, the liquid injection jig 2 is still held in the lock state, and the guide pin 26 is held in a state shown in FIG. 7A in which the guide pin 26 undergoes the bearing operation by the I-shaped groove 27 of the fitting portion 22, and the portion of the L-shaped groove 28 of the channel exposure preventing cam 23 orthogonal to the channel protrusion direction.

Next, the liquid injection jig 2 is rotated while the flanges 221 are moved along the rotation guide 151 so as to follow the direction of the guide for the guide pin 26 by the L-shaped groove 28, thereby engaging the flanges 221 with the rotation guide 151 (refer to FIG. 8 B). At this time, the position of the channel exposure preventing cam 23 is fixed by the engagement between the lock pin engaging grooves 29 and the lock pins 152 so as to be unable to be rotated. For this reason, when the liquid injection jig 2 is rotated, only the main body 21 and the fitting portion 22 are rotated accordingly, and the channel exposure preventing cam 23 accommodated in the cam accommodating groove 24 of the fitting portion 22 is not rotated. As a result, a relative position between the fitting portion 22 and the channel exposure preventing cam 23 is changed.

When the liquid injection jig 2 is rotated until the guide pin 26 reaches the folded portion of the L-shaped groove 28 of the channel exposure preventing cam 23, the I-shaped groove 27 of the fitting portion 22, and the portion of the L-shaped groove 28 of the channel exposure preventing cam 23 along the channel protrusion direction are superposed on each other. As a result, the guide pin 26 becomes a state in which the guide pin 26 undergoes the bearing operation by the I-shaped groove 27 and the portion of the L-shaped groove 28 along the channel protrusion direction. Thus, the direction of the guide for the guide pin 26 by the I-shaped groove 27 and the L-shaped groove 28 is changed to the channel protrusion direction, so that the liquid injection jig 2 becomes the release state.

Finally, the main body 21 of the liquid injection jig 2 becoming the release state is pushed into the fitting portion 22 to move the channel 25 from the accommodation position to the exposure position (refer to FIG. 8 C). The channel 25 is positioned for the puncture portion 34 of the microchip 3 by the opening portion 15 of the microchip case 1. For this reason, the channel 25 which has been moved from the accommodation position to the exposure position is precisely punctured into the puncture portion 34 of the substrate layer 3a of the microchip 3. A schematic cross sectional view corresponding to FIG. 8C is shown in FIG. 9. When the tip portion of the channel 25 punctured into the puncture portion 34 has reached the inner space of the introduction portion 31, the sample liquid in the sample tube 5 is sucked by the negative portion to be introduced to the introduction portion 31.

When the liquid injection jig 2 is described to be detached from the microchip case 1, the procedures described above are reversely carried out. In a state in which the main body 21 of the liquid injection jig 2 is pushed into the fitting portion 22, the liquid injection jig 2b is made unable to be rotated by the portion of the L-shaped groove 28 along the channel protrusion direction. Then, firstly, the main body 21 of the liquid injection jig 2 held in the release state is drawn back from the fitting portion 22 to move the channel 25 from the exposure position to the accommodation position.

As a result, the guide pin 26 is located in the folded portion of the L-shaped groove 28 of the channel exposure preventing cam 23, and thus the liquid injection jig 2 can be rotated so as to follow the direction of the guide for the guide pin 26 by the L-shaped groove 28. When the liquid injection jig 2 is rotated, the guide pin 26 undergoes the bearing operation by the I-shaped groove 27, and the portion of the L-shaped groove 28 of the channel exposure preventing cam 23 orthogonal to the channel protrusion direction, and thus the liquid injection jig 2 is held in the lock state. After completion of the rotation, since the engagement of the flanges 221 with the rotation guide 151 is precisely released, finally, the flanges 221 are inserted through the rotation guide cutouts 153, thereby removing the liquid injection jig 2 from the microchip case 1.

In such a manner, in the jig set according to this embodiment, the sample liquid can be precisely and simply introduced to the minute region as well of the microchip 3. In addition, it is possible to prevent that the channel 25 is punctured into the unsuitable portion of the microchip 3, whereby the outside air leaks into the region(s) and thus the suction of the sample liquid by the negative pressure becomes impossible or failure.

In addition thereto, in the jig set according to this embodiment, only in the phase of the fitting to the opening portion 15 of the microchip case 1, the channel 25 of the liquid injection jig 2 is moved from the accommodation position to the exposure position, thereby making it possible to puncture the puncture portion 34 of the microchip 3. Therefore, in the state in which the liquid injection jig 2 is not fitted into the opening portion 15, since the channel 25 is prevented from being exposed to the outside of the jig, there is prevented an accident that the channel 25 is stung into a surface of the body by a mal-operation, thereby making it also possible to enhance the safety of the operation. It is noted that when the liquid injection jig 2 is fitted into the opening portion 15 and thus the opening cover 14 is located in the exposure position of the opening portion 15, since the microchip case 1 cannot be opened, a possible needle sting accident after the liquid injection jig 2 is fitted into the opening portion 15 can be prevented.

### 2. Jig Set According to Second Embodiment

### (1) Microchip Case

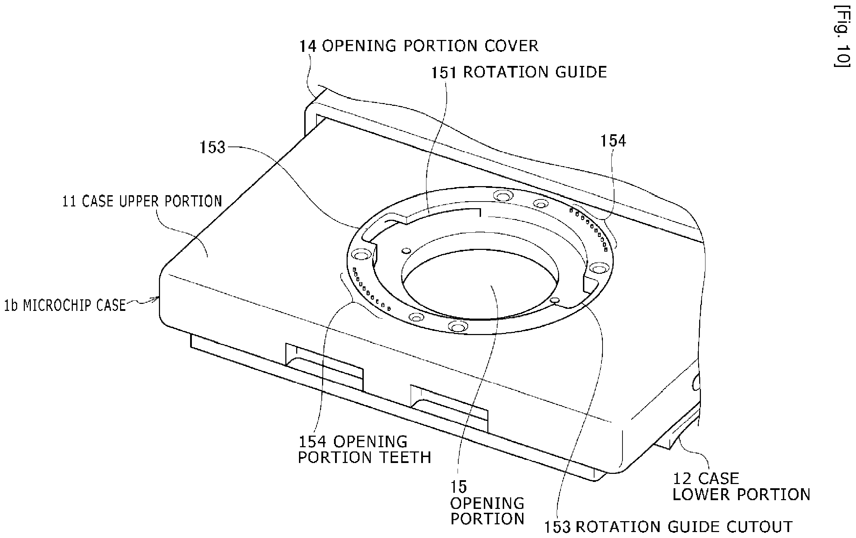

FIG. 10 is an enlarged schematic view showing a construction of the opening portion 15 of a microchip case included in a jig set according to a second embodiment of the present technique. The figure shows a state in which the opening portion cover of the microchip case is opened.

The microchip case 1b is composed of the case upper portion 11, the case lower portion 12, and the opening portion cover 14, and the microchip is accommodated between the case upper portion 11 and the case lower portion 12 which are coupled to each other by the hinge 13. The microchip 3 described above can be used as the microchip accommodated in the microchip case 1b.

The opening portion 15 into which a liquid injection jig 2b which will be described later is to be fitted is formed in the case upper portion 11. The opening portion cover 14 is slid between a position where the opening portion 15 is covered, and a position where the opening portion 15 is exposed and thus the position thereof can be changed. A construction and a function of the opening portion cover 14 are the same as those of the microchip case 1 according to the first embodiment.

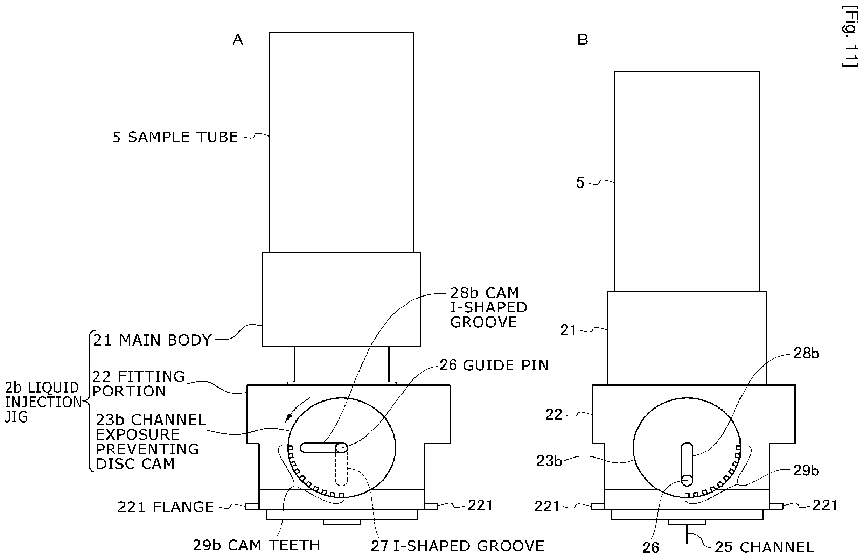

The opening portion 15 functions in order to position the channel 25 (refer to FIG. 11 which will be described later) disposed in the liquid injection jig 2b for the puncture portion of the microchip accommodated in the case. In addition, the rotation guide 151 which is engaged with the flanges 221 (refer to the same figure) of the liquid injection jig 2b, and plural opening portion teeth 154 which are engaged with a channel exposure preventing disc cam 23b composing the liquid injection jig 2b are disposed in the opening portion 15. In FIG. 10, reference numeral 153 designates each of the rotation guide cutouts through which the flanges are inserted when the flanges 221 of the liquid injection jig 2b are engaged with the rotation guide 151. A positioning function of the opening portion 15, and functions of the rotation guide 151 and the opening portion teeth 154 will be described in detail hereinafter.

### (2) Liquid Injection Jig

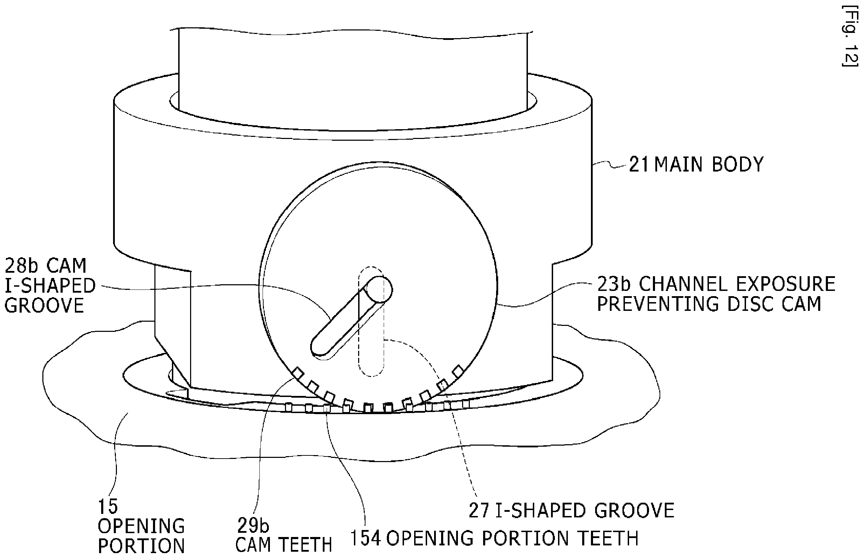

FIG. 11 is a schematic view showing a construction of the liquid injection jig included in the jig set according to the second embodiment of the present technique. FIG. 11 shows the liquid injection jig in a state FIG. 11A in which the channel is located in the accommodation position, and the liquid injection jig in a state FIG. 11 B in which the channel is located in the exposure position. In addition, FIG. 12 is a schematic view showing one procedure of a method of injecting the liquid into the microchip by the liquid injection jig.

The liquid injection jig 2b is composed of the main body 21 the fitting portion 22 and the channel exposure preventing disc cam 23b (refer to FIG. 11). The sample tube 5 can be squeezed and mounted to the main body 21, and the channel 25 through which the sample liquid within the sample tube 5 is injected into the microchip 3 by the puncture is disposed in the main body 21. A construction of the main body 21 is the same as that of the liquid injection jig 2 according to the first embodiment. In the liquid injection jig 2b as well, the position of the channel 25 can be changed between the position of the accommodation in the inside of the jig (refer to FIG. 11 A), and the position of the exposure to the outside of the jig (refer to FIG. 11 B).

The liquid injection jig 2b can be mounted to the microchip case 1b by fitting the fitting portion 22 into the opening portion 15 of the microchip case 1b described above. The mounting can be carried out similarly to the case of the mounting of the liquid injection jig 2 according to the first embodiment to the microchip case 1. In this case, a point in which the opening portion 15 functions in order to position the channel 25 disposed in the liquid injection jig 2b for the puncture portion 34 of the microchip is also as described in the first embodiment.

The guide pin 26 is disposed in the main body 21 and guide grooves through which the guide pin 26 is guided are formed in the fitting portion 22 and the channel exposure preventing disc cam 23b, respectively. The I-shaped groove 27 is linearly formed in the channel protrusion direction in the fitting portion 22 similarly to the case of the liquid injection jig 2 according to the first embodiment.

A cam I-shaped groove 28b which extends linearly in a radial direction from a center of a circle is formed in the channel exposure preventing disc cam 23b, and the guide pin 26 disposed in the main body 21 is inserted through the center. The channel exposure preventing disc cam 23b is mounted to a side surface of the main body 21 in a state in which the channel exposure preventing disc cam 23b can be rotated with the guide pin 26 as an axis. The guide pin 26 is inserted through the I-shaped groove 27 of the main body 21, and the cam I-shaped groove 28b of the channel exposure preventing disc cam 23b, and undergoes the bearing operation by both of the guide grooves to be guided. Plural cam teeth 29b which are engaged with the opening portion teeth 154 provided in the opening portion 15 in a phase of fitting of the liquid injection jig 2b into the opening portion 15 are formed on a side peripheral surface of the channel exposure preventing disc cam 23b.

The guide pin 26 and the cam I-shaped groove 28b function as the braking mechanism for controlling the movement of the channel 25 from the accommodation position to the exposure position (or the movement from the exposure position to the accommodation position). The opening portion teeth 154 provided in the opening portion 15 of the microchip case 1b, and the cam teeth 29b provided in the channel exposure preventing disc cam 23b also become the constituent elements composing the braking mechanism. The braking mechanism will now be described with reference to FIG. 11.

Firstly, in a state shown in FIG. 11A, the I-shaped groove 27 of the main body 21, and the cam I-shaped groove 28b of the channel exposure preventing disc cam 23b show a positional relationship of about 90 degrees, and the position of the guide pin 26 is fixed to a center of the channel exposure preventing disc cam 23b. In this lock state, both of the main body 21 and the channel 25 cannot be moved in the channel protrusion direction, and the channel 25 is held in the accommodation position.

On the other hand, in a state shown in FIG. 11B, the I-shaped groove 27 and the cam I-shaped groove 28b are superposed on each other, and the direction of the guide for the guide pin 26 by both of the guide grooves agrees with the channel protrusion direction. In this release state, the main body 21 and the channel 25 can come to be moved in the channel protrusion direction. Therefore, the main body 21 is pushed into the fitting portion 22, thereby making it possible to move the channel 25 from the accommodation position to the exposure position.

The I-shaped groove 27 and the cam I-shaped groove 28b are changed in such a way that in the lock state, the position of the guide pin 26 is fixed, and in the release state, the guide pin 26 is guided to the direction agreeing with the channel protrusion direction.

### (3) Sample Liquid Injection using Jig Set

The switching between the lock state and the release state can be carried out by mounting the liquid injection jig 2b to the opening portion 15 of the microchip case 1b, and rotating the liquid injection jig 2b. That is to say, firstly, the flanges 221 provided in the fitting portion 22 of the liquid injection jig 2b held in the lock state are inserted through the rotation guide cutouts 153. At this time, the cam teeth 29b provided in the channel exposure preventing disc cam 23b, and the opening portion teeth 154 provided in the opening portion 15 are engaged with each other (refer to FIG. 12 as well).

After completion of this operation, the liquid injection jig 2b is still held in the lock state, and the guide pin 26 is held in the state shown in FIG. 11A in which the position thereof is fixed to the center of the channel exposure preventing disc cam 23b.

Next, the liquid injection jig 2b is rotated so as to follow the direction of the guide of the rotation guide 151 of the opening portion 15, thereby engaging the flanges 221 with the rotation guide 151 (refer to FIG. 12). At this time, the cam teeth 29b of the channel exposure preventing disc cam 23b, and the opening portion teeth 154 of the opening portion 15 are engaged with each other, whereby the channel exposure preventing disc cam 23b is rotated with the guide pin 26 as an axis (refer to an arrow in FIG. 11 A), thereby changing the rotation position of the channel exposure preventing disc cam 23b.

That is to say, the channel exposure preventing disc cam 23b is changed from the rotation position where the I-shaped groove 27 and the cam I-shaped groove 28b make an angle of about 90 degrees with each other to the rotation position where the I-shaped groove 27 and the cam I-shaped groove 28b are superposed on each other. Also, as a result, the direction of the guide for the guide pin 26 by both of the guide grooves agrees with the channel protrusion direction, and thus the liquid injection jig 2b becomes the release state.

Finally, the main body 21 of the liquid injection jig 2b which has become the release state is pushed into the fitting portion 22 to move the channel 25 from the accommodation position to the exposure position (refer to FIG. 11 B). The channel 25 which has been moved from the accommodation position to the exposure position is punctured into the puncture portion of the microchip, so that the sample liquid is injected into the microchip.

When the liquid injection jig 2b is desired to be detached from the microchip case 1b, the procedures described above are reversely carried out. Since in the state in which the main body 21 of the liquid injection jig 2b is pushed into the fitting portion 22, the guide pin 26 blocks the rotation of the channel exposure preventing disc cam 23b, the liquid injection jig 2b is unable to be rotated. Then, firstly, the main body 21 of the liquid injection jig 2b held in the release state is drawn back from the fitting portion 22 to move the channel 25 from the exposure position to the accommodation position.

As a result, the guide pin 26 is located at the center of the channel exposure preventing disc cam 23b, whereby the liquid injection jig 2b can be rotated so as to follow the direction of the guide of the rotation guide 151 of the opening portion 15. When the liquid injection jig 2b is rotated, the cam teeth 29b of the channel exposure preventing disc cam 23b, and the opening portion teeth 154 of the opening portion 15 are engaged with each other, whereby the channel exposure preventing disc cam 23b is rotated with the guide pin 26 as an axis and thus the liquid injection jig 2 becomes the lock state. After completion of the rotation, since the engagement of the flanges 221 with the rotation guide 151 is previously released, finally, the flanges 221 are inserted through the rotation guide cutouts 153 to detach the liquid injection jig 2 from the microchip case 1.

In such a manner, in the jig set according to this embodiment, only in the phase of the fitting of the microchip case 1b into the opening portion 15, the channel 25 of the liquid injection jig 2b is moved from the accommodation position to the exposure position, thereby making it possible to puncture the channel 25 into the puncture portion of the microchip. Therefore, in the state in which the liquid injection jig 2b is not fitted into the opening portion 15, since the channel 25 is prevented from being exposed to the outside of the jig, there is prevented an accident that the channel 25 is stung into a surface of the body by a mal-operation, thereby making it also possible to enhance the safety of the operation.

It is noted that in the jig set according to this embodiment, the opening portion teeth 154 and the cam teeth 29b which are provided in the microchip case 1b and the liquid injection jig 2b, respectively, are by no means limited to the concave-shaped or convex-shaped teeth described herein as long as the opening portion teeth 154 and the cam teeth 29b can be engaged with each other, and thus may also have saw-tooth shapes, pin shapes or the like.

### 3. Jig Set According to Third Embodiment

### (1) Microchip Case and Liquid Injection Jig

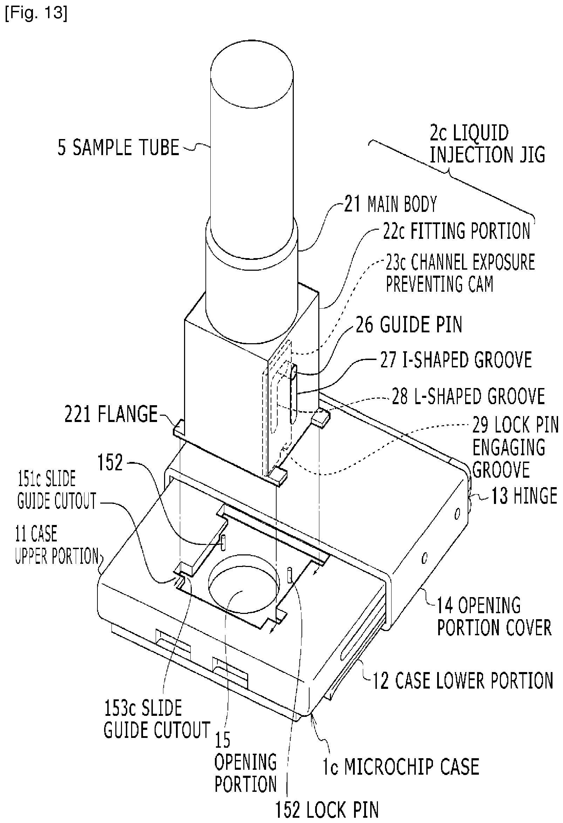

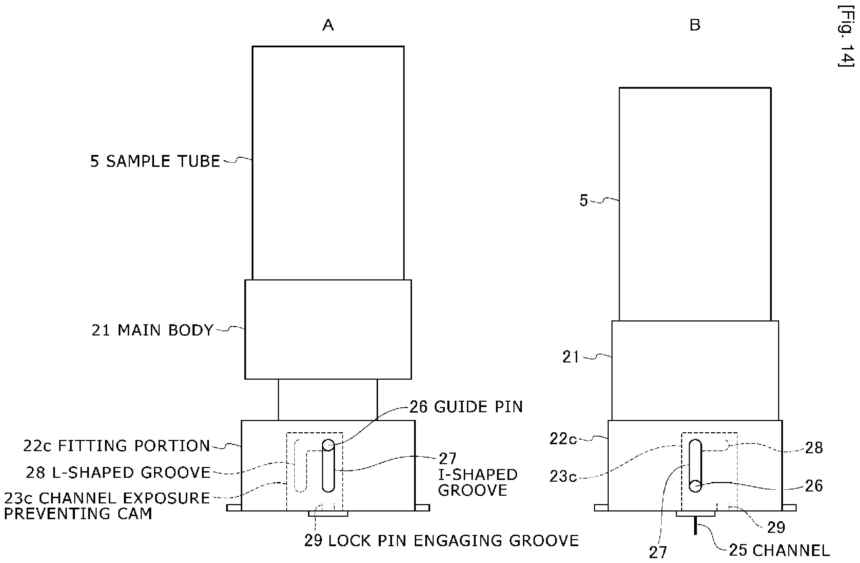

FIGS. 13 and 14 are respectively schematic views showing constructions of a microchip case and a liquid injection jig included in a jig set according to a third embodiment of the present technique.

The microchip case 1c and the liquid injection jig 2c are different from the microchip case 1 and the liquid injection jig 2 according to the first embodiment described above in that a fitting portion 22c of the liquid injection jig 2c is not formed in the columnar shape, but is formed in a rectangular parallelepiped-like shape. In addition, the microchip case 1c and the liquid injection jig 2c are also different from the first embodiment described above in that fitting of the microchip case 1c of the fitting portion 22c into the opening portion 15 is not carried out by the rotation of the jig, but is carried out by sliding.

The microchip case 1c is composed of the case upper portion 11, the case lower portion 12, and the opening portion cover 14, and the microchip is accommodated between the case upper portion 11 and the case lower portion 12 which are coupled to each other by the hinge 13. The construction and function of the opening portion cover 14 are the same as those in the case of the microchip case 1 according to the first embodiment. In addition, the microchip 3 described above can be used as the microchip accommodated in the microchip case 1c.

The opening portion 15 functions in order to position the channel 25 (refer to FIG. 14 which will be described later) disposed in the liquid injection jig 2c for the puncture portion of the microchip accommodated in the case. In addition, slide guides 151c which are engaged with the flanges 221 of the liquid injection jig 2c are disposed in the opening portion 15. In the figure, reference symbol 153c designates each of slide guide cutouts through which the flanges 221 are inserted when the flanges 221 of the liquid injection jig 2c are engaged with the slide guides 151c. The flanges 221 are provided in four corners of the fitting portion 22c formed in the rectangular parallelepiped-like shape, respectively, and four slide guides 151c and four slide guide cutouts 153c are formed in positions corresponding to the flanges 221, respectively.

The liquid injection jig 2c is composed of the main body 21, the fitting portion 22c, and a channel exposure preventing cam 23c. The channel exposure preventing cam 23c is formed in a plate-like member, and is accommodated in a cam accommodating groove formed in the fitting portion 22c formed in the rectangular parallelepiped-like shape. The fitting portion 22c and the channel exposure preventing cam 23c can be slid in a state in which the channel exposure preventing cam 23c is accommodated in the cam accommodating groove.

The guide pin 26 is disposed in the main body 21, and the I-shaped groove 27 and the L-shaped grooves 28 are formed as the guide grooves for guiding the guide pin 26 in the fitting portion 22c and the channel exposure preventing cam 23c, respectively.

The functions of the guide pin 26, the I-shaped groove 27, and the L-shaped grooves 28 are as described in the first embodiment, and the guide pin 26, the I-shaped groove 27, and the L-shaped grooves 28 function as the braking mechanism for controlling the movement of the channel 25 from the accommodation position (refer to FIG. 14 A) to the exposure position (refer to FIG. 14 B) (or the movement from the exposure position to the accommodation position).

### (2) Sample Liquid Injection using Jig Set

The liquid injection jig 2c is mounted to the opening portion 15 of the microchip case 1c and is then slid, thereby carrying out the injection of the sample liquid into the microchip. Firstly, the flanges 221 provided in the fitting portion 22c of the liquid injection jig 2c are inserted through the slide guide cutouts 153c (refer to FIG. 13). At this time, the lock pin engaging grooves 29 provided in the channel exposure preventing cam 23c are engaged with the lock pins 152 provided in the opening portion 15, respectively.

At this time, the liquid injection jig 2c is held in the lock state shown in FIG. 14A, and the guide pin 26 undergoes the bearing operation by the I-shaped groove 27 of the fitting portion 22c, and the portion of the L-shaped groove 28 of the channel exposure preventing cam 23c orthogonal to the channel protrusion direction. Therefore, the movement of the main body 21 and the channel 25 in the channel protrusion direction is blocked, and thus the channel 25 is held in the accommodation position.

Next, the liquid injection jig 2c is slid while the flanges 21 are moved along the slide guides 151c so as to follow the direction of the guide for the guide pin 26 by the L-shaped groove 28, thereby engaging the flanges 221 with the sliding guides 151c. At this time, the position of the channel exposure preventing cam 23c is fixed so as to be unable to be slid by the engagement between the lock pin engaging grooves 29 and the lock pins 152. For this reason, when the liquid injection jig 2c is slid, only the main body 21 and the fitting portion 22c are moved, and the channel exposure preventing cam 23c is not moved, thereby changing the relative positions of the fitting portion 22c and the channel exposure preventing cam 23c.

When the relative positions of the fitting portion 22c and the channel exposure preventing cam 23c are changed, the I-shaped groove 27 of the fitting portion 22, and the portion of the L-shaped groove 28 of the channel exposure preventing cam 23c along the channel protrusion direction are superposed on each other. As a result, the guide pin 26 becomes a state in which the guide pin 26 undergoes the bearing operation by the I-shaped groove 27, and the portion of the L-shaped groove 28 along the channel protrusion direction, the direction of the guide for the guide pin 26 by the I-shaped groove 27, and the L-shaped groove 28 is changed to the channel protrusion direction, and thus the liquid injection jig 2c becomes the release state shown in FIG. 14B.

In the release state, the main body 21 and the channel 25 are allowed to be moved in the channel protrusion direction. Therefore, as shown in the figure, the main body 21 is pushed into the fitting portion 22c, whereby the channel 25 is moved from the accommodation position to the exposure position, thereby making it possible to puncture the channel 25 into the puncture portion of the microchip accommodated in the microchip case 1c.

When the liquid injection jig 2c is desired to be detached from the microchip case 1, the procedures described above are reversely carried out. Firstly, the main body 21 of the liquid injection jig 2c held in the release state is drawn back from the fitting portion 22c to move the channel 25 from the exposure position to the accommodation position. At this time, the guide pin 26 is located in the folded portion of the L-shaped groove 28 of the channel exposure preventing cam 23c.

Next, the liquid injection jig 2c is slid so as to follow the direction of the guide for the guide pin 26 by the L-shaped groove 28. As a result, the guide pin 26 undergoes the bearing operation by the I-shaped groove 27 of the fitting portion 22c, and the portion of the L-shaped groove 28 of the channel exposure preventing cam 23 orthogonal to the channel protrusion direction, and thus the liquid injection jig 2c is held in the lock state. After completion of the sliding, the flanges 221 are inserted through the slide guide cutouts 153c, thereby detaching the liquid injection jig 2c from the microchip case 1c.

It is noted that in the state in which the main body 21 of the liquid injection jig 2c is pushed into the fitting portion 22c, since the liquid injection jig 2c is made unable to be slid by the portion of the L-shaped groove 28 along the channel protrusion direction, the liquid injection jig 2 cannot be detached from the microchip case 1.

In such a manner, in the jig set according to this embodiment, only in the phase of the fitting of the microchip case 1 into the opening portion 15, the channel 25 of the liquid injection jig 2c is moved from the accommodation position to the exposure position, thereby making it possible to puncture the channel 25 into the puncture portion of the microchip. Therefore, in the state in which the liquid injection jig 2c is not fitted into the opening portion 15, since the channel 25 is prevented from being exposed to the outside of the jig, there is prevented an accident that the channel 25 is stung into a surface of the body by a mal-operation, thereby making it also possible to enhance the safety of the operation.

### [Industrial Applicability]

According to the sample liquid injection jig set and the like of the present technique, the sample can be simply and precisely introduced to the region(s) of the microchip, and thus the high analysis precision can be obtained. For this reason, the jig set and the like of the present technique can be suitably used together with the electrophoresis apparatus which separates plural materials from one another through the electrophoresis within the flow paths on the microchip, and optically detects the materials thus separated, the reaction apparatus (for example, the real time PCR apparatus) which causes the reaction among plural materials to progress within the wells on the microchip, and optically detects the materials generated, and the like.

### [Reference Signs List]

1, 1b, 1c: Microchip case, 11: Case upper portion, 111: Cover lock spring, 12: Case lower portion, 121: Cover guide, 122: Cover guide cutout, 13: Hinge, 14: Opening portion cover, 141: Cover claw, 15: Opening portion, 151: Rotation guide, 151c: Slide guide, 152: Lock pin, 153: Rotation guide cutout, 153c: Slide guide cutout, 154: Opening portion teeth, 2, 2b, 2c: Liquid injection jig, 21: Main body, 22, 22c: Fitting portion, 221: Flange, 222: Channel hole, 23, 23c: Channel exposure preventing cam, 23b: Channel exposure preventing disc cam, 24: Cam accommodating groove, 25: Channel, 26: Guide pin, 27: I-shaped groove, 28: L-shaped groove, 28b: Cam I-shaped groove, 29: Lock pin engaging groove, 29b: Cam teeth, 3: Microchip, 3a, 3b: Substrate layer, 31: Introduction portion, 32: Flow path, 33: Well, 34: Puncture portion, 4: Microchip holder, 5: Sample tube.

## Claims

1. A jig set **characterized by** comprising:
a liquid injecting jig (2) comprising a jig configuration including a plurality of parts adapted to be in cooperative engagement so as to position a channel (25) within the jig configuration,
wherein the plurality of parts includes:
a channel exposure preventing cam (23) configured to prevent exposure of the channel (25) thereby allowing the channel to be positioned within the jig configuration,
a fitting portion (22) that is adapted to be in cooperative engagement with the channel exposure preventing cam (23) so as to position the channel (25) within the jig configuration,
a main body portion (21) that includes the channel (25), wherein the main body portion (21) is adapted to be in cooperative engagement with the channel exposure preventing cam (23) and the fitting portion (22) thereby allowing the channel (25) to be positioned within the jig configuration; and
wherein the jig configuration is adapted to fit via the fitting portion (22) an opening (15) of a microchip case (1) through which the channel (25) is adapted to be received so as to expose the channel (25) from the jig configuration; and
a microchip case (1) including the opening (15).

2. The jig set according to claim 1, wherein the channel exposure preventing cam (23) includes any one of a L-shaped groove (28) and an I-shaped groove (27) allowing the jig configuration to be adapted to fit the opening (15) through which the channel (25) is adapted to be exposed.

3. The jig set according to claim 1 or 2, wherein the fitting portion (22) includes an I-shaped groove (27).

4. The jig set according to claim 1, wherein the jig configuration is rotatably adapted to engage the opening (15) so as to allow the channel (25) to be exposed from the jig configuration.

5. The jig set of claim 1, wherein the microchip case (1) includes a cover guide (121) adapted to be in sliding engagement with a cover (14) so as to position the cover (14) in an exposure position thereby allowing the opening (15) to be accessed, and wherein the cover (14) includes a cover claw member (141) adapted to engage the cover guide (121) in the exposure position so as to allow the microchip case (1) to be in a closed state.

## Patentansprüche

1. Vorrichtungsset, **dadurch gekennzeichnet, dass** es Folgendes umfasst:
eine Flüssigkeitsinjektionsvorrichtung (2), die eine Vorrichtungskonfiguration umfasst, welche mehrere Teile enthält, die dazu ausgeführt sind, in zusammenwirkendem Eingriff zu stehen, um einen Kanal (25) in der Vorrichtungskonfiguration zu positionieren,
wobei die mehrere Teile Folgendes beinhalten:
einen Kanalfreilegungsverhinderungsnocken (23), der dazu konfiguriert ist, ein Freilegen des Kanals (25) zu verhindern, wodurch der Kanal in der Vorrichtungskonfiguration positioniert werden kann,
einen Anordnungsteil (22), der dazu ausgeführt ist, mit dem Kanalfreilegungsverhinderungsnocken (23) in zusammenwirkendem Eingriff zu stehen, um den Kanal (25) in der Vorrichtungskonfiguration zu positionieren,
einen Hauptkörperteil (21), der den Kanal (25) enthält, wobei der Hauptkörperteil (21) dazu ausgeführt ist, mit dem Kanalfreilegungsverhinderungsnocken (23) und dem Anordnungsteil (22) in zusammenwirkendem Eingriff zu stehen, wodurch der Kanal (25) in der Vorrichtungskonfiguration positioniert werden kann, und
wobei die Vorrichtungskonfiguration dazu ausgeführt ist, über den Anordnungsteil (22) eine Öffnung (15) eines Mikrochipgehäuses (1) vorzusehen, durch die der Kanal (25) ausführungsgemäß aufgenommen werden soll, um den Kanal (25) von der Vorrichtungskonfiguration freizulegen; und
ein Mikrochipgehäuse (1), das die Öffnung (15) enthält.

2. Vorrichtungsset nach Anspruch 1, wobei der Kanalfreilegungsverhinderungsnocken (23) eine von einer L-förmigen Nut (28) und einer I-förmigen Nut (27) enthält, die gestattet, dass die Vorrichtungskonfiguration ausführungsgemäß mit der Öffnung (15) versehen ist, durch die der Kanal (25) ausführungsgemäß freigelegt werden soll.

3. Vorrichtungsset nach Anspruch 1 oder 2, wobei der Anordnungsteil (22) eine I-förmige Nut (27) enthält.

4. Vorrichtungsset nach Anspruch 1, wobei die Vorrichtungskonfiguration dazu ausgeführt ist, drehbar mit der Öffnung (15) in Eingriff zu gelangen, damit der Kanal (25) von der Vorrichtungskonfiguration freigelegt werden kann.

5. Vorrichtungsset nach Anspruch 1, wobei das Mikrochipgehäuse (1) eine Abdeckungsführung (121) enthält, die dazu ausgeführt ist, mit einer Abdeckung (14) in Schiebeeingriff zu gelangen, um die Abdeckung (14) in einer Freilegungsposition zu positionieren, wodurch die Öffnung (15) zugänglich ist, und wobei die Abdeckung (14) ein Abdeckungsklauenglied (141) enthält, das dazu ausgeführt ist, die Abdeckungsführung (121) in der Freilegungsposition in Eingriff zu nehmen, damit sich das Mikrochipgehäuse (1) in einem geschlossenen Zustand befinden kann.

## Revendications

1. Ensemble gabarit **caractérisé en ce qu'**il comprend :
un gabarit d'injection de liquide (2) comprenant une configuration de gabarit comportant une pluralité de pièces prévues pour être en engagement de coopération de manière à positionner un canal (25) à l'intérieur de la configuration de gabarit,
la pluralité de pièces comportant :
une came (23) empêchant l'exposition du canal, configurée pour empêcher l'exposition du canal (25) pour ainsi permettre au canal d'être positionné à l'intérieur de la configuration de gabarit,
une partie d'ajustement (22) qui est prévue pour être en engagement de coopération avec la came (23) empêchant l'exposition du canal de manière à positionner le canal (25) à l'intérieur de la configuration de gabarit,
une partie de corps principal (21) qui inclut le canal (25), la partie de corps principal (21) étant prévue pour être en engagement de coopération avec la came (23) empêchant l'exposition du canal et la partie d'ajustement (22), pour ainsi permettre au canal (25) d'être positionné à l'intérieur de la configuration de gabarit ; et
la configuration de gabarit étant prévue pour s'ajuster, par le biais de la partie d'ajustement (22), dans une ouverture (15) d'un boîtier de micropuce (1) à travers laquelle le canal (25) est prévu pour être reçu de manière à exposer le canal (25) à partir de la configuration de gabarit ; et
un boîtier de micropuce (1) comportant l'ouverture (15) .

2. Ensemble gabarit selon la revendication 1, dans lequel la came (23) empêchant l'exposition du canal comporte l'une quelconque parmi une rainure en forme de L (28) et une rainure en forme de I (27) permettant à la configuration de gabarit d'être adaptée de manière à s'ajuster dans l'ouverture (15) à travers laquelle le canal (25) est prévu pour être exposé.

3. Ensemble gabarit selon la revendication 1 ou 2, dans lequel la partie d'ajustement (22) comporte une rainure en forme de I (27).

4. Ensemble gabarit selon la revendication 1, dans lequel la configuration de gabarit est adaptée de manière à pouvoir tourner pour s'engager avec l'ouverture (15) de manière à permettre au canal (25) d'être exposé à partir de la configuration de gabarit.

5. Ensemble gabarit selon la revendication 1, dans lequel le boîtier de micropuce (1) comporte un guide de couvercle (121) prévu pour être en engagement de coulissement avec un couvercle (14) de manière à positionner le couvercle (14) dans une position d'exposition pour ainsi permettre l'accès à l'ouverture (15), et dans lequel le couvercle (14) comporte un organe de griffe de couvercle (141) prévu pour venir en prise avec le guide de couvercle (121) dans la position d'exposition de manière à permettre au boîtier de micropuce (1) d'être dans un état fermé.
